# EUROPEAN PATENT APPLICATION

(11) **EP 2 420 662 A1**
(43) Date of publication of application: **22.02.2012**
(21) Application number: 11175908.0
(22) Date of filing: 29.07.2011
(51) Int. Cl.: F02C 1/10

(54) **Closed cycle brayton cycle system and method**

(30) Priority: 12.08.2010 US 855291
(71) Applicant: Nuovo Pignone S.p.A., 50127 Florence (IT)
(72) Inventor: Diddi, Pradeep, 50127 Firenze (IT); Kosamana, Bhaskara, 50127 Firenze (IT)
(74) Representative: Illingworth-Law, William Illingworth

(57) **Abstract**

Method and unit for generating energy with improved efficiency. A Brayton cycle unit includes a multistage compressor configured to compress a flowing medium; a first heat exchanger fluidly connected to the multistage compressor and configured to transfer heat from a working medium passing the first heat exchanger to the compressed flowing medium; an expander fluidly connected to the first heat exchanger and configured to expand the heated compressed flowing medium for producing a rotation of a shaft of the expander; and a second heat exchanger fluidly connected between the expander and the compressor and configured to remove heat from the expanded flowing medium. A path of the flowing medium through the unit is closed. At least one inter-cooler mechanism between first and second stages of the multistage compressor is configured to cool the flowing medium to a predetermined temperature.

## Description

Embodiments of the subject matter disclosed herein generally relate to methods and systems and, more particularly, to mechanisms and techniques for increasing an efficiency of a closed cycle Brayton cycle system.

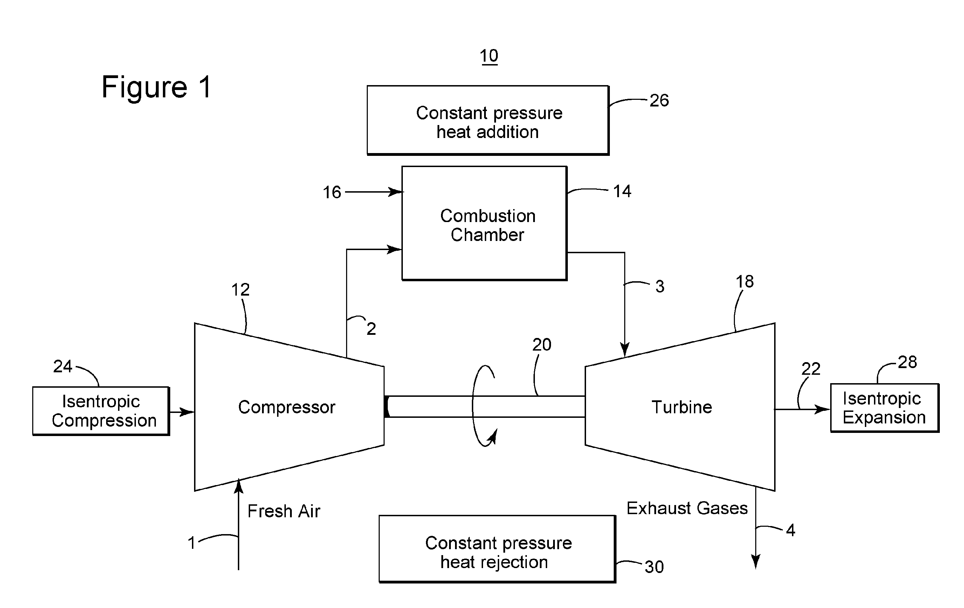

During the past years, the use of gas turbines for providing thrust for most aircrafts, generating electricity, etc. has become popular. Gas turbines operate on a Brayton cycle and have a working fluid (usually air). The gas turbines may use an open or a closed Brayton cycle. Figure 1 illustrates a system 10 that operates based on the open Brayton cycle. Fresh air is provided at a compressor 12 in step 1. After being compressed, the air is provided in step 2 to an internal combustor 14. At the same time, fuel 16 is injected and ignited into the combustion chamber 14 for heating the compressed air. After being heated, the high temperature, high pressure gases from the combustion chamber are provided in step 3 to a turbine 18. The exhaust gases rotate a shaft 20 of the turbine 18 for producing rotational energy 22. The exhaust gasses, having now a lower temperature (500 °C) and pressure are discharged in step 4 into the atmosphere.

In terms of the thermodynamic processes taking place in this open cycle, it is noted that an isentropic compression 24 takes place in the compressor 12, a constant pressure heat addition 26 takes place in the combustion chamber 14, an isentropic expansion 28 takes place in the turbine 18 and a constant pressure heat rejection 30 takes place when the exhaust gases are released into the environment. Those skilled in the art would appreciate that thermodynamic processes 24, 26, 28 and 30 are ideal processes, i.e., the air in the various elements of the system 10 do not experience exactly these transformations but transformations that are substantially closed to the ideal transformations. However, for the purpose of characterizing a real life system, it is accepted in the art to use ideal transformations that only approximate the real transformations.

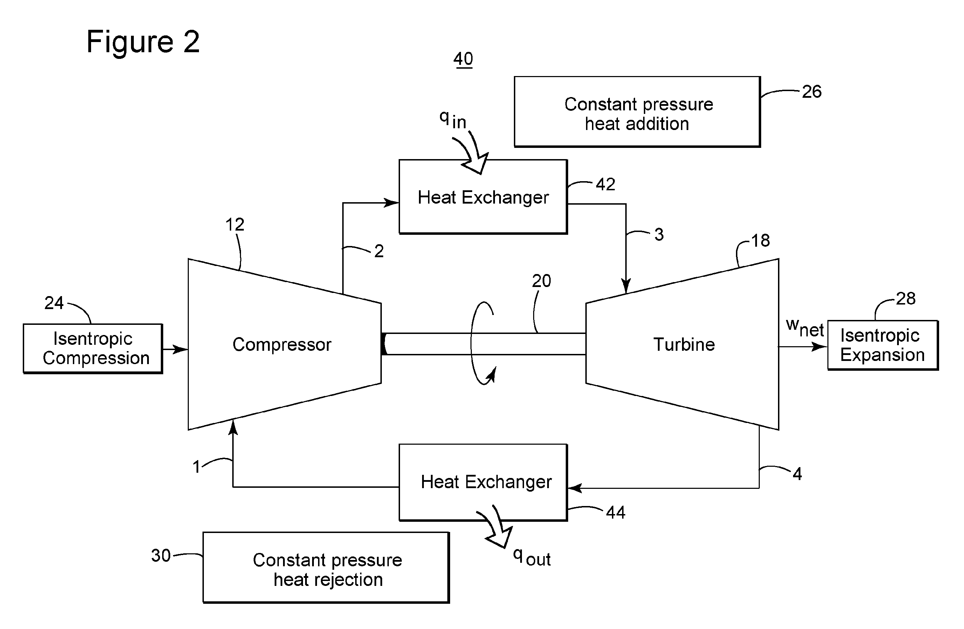

Closed Brayton cycle systems have been developed to address some concerns related to the open Brayton cycle. A closed Brayton cycle system 40 is shown in Figure 2. This system includes the same compressor 12 and turbine 18 but the combustion chamber 14 is replaced by a first heat exchanger 42 and the medium used through the system 40 is recirculated via a second heat exchanger 44, i.e., not released into atmosphere. In this way, no part of the medium is released into the atmosphere. However, for this kind of system, a heat source need to be provided such that heat is transferred via the first heat exchanger 42 to the medium and this heat source may be nuclear, geothermal, solar, conventional, electric, etc.

However, the existing closed Brayton cycle systems are not very efficient. Accordingly, it would be desirable to provide systems and methods that increase the efficiency of the closed Brayton cycle systems.

According to one exemplary embodiment, there is a Brayton cycle unit. The unit includes a multistage compressor configured to compress a flowing medium; a first heat exchanger fluidly connected to the multistage compressor and configured to transfer heat from a working medium passing the first heat exchanger to the compressed flowing medium; an expander fluidly connected to the first heat exchanger and configured to expand the heated compressed flowing medium for producing a rotation of a shaft of the expander; and a second heat exchanger fluidly connected between the expander and the compressor and configured to remove heat from the expanded flowing medium. A path of the flowing medium through the multistage compressor, the first heat exchanger, the expander and the second heat exchanger is closed. There is at least one inter-cooler mechanism between first and second stages of the multistage compressor configured to cool the flowing medium between the first and second stages to a predetermined temperature.

According to still another exemplary embodiment, there is a Brayton cycle system. The system includes a closed cycle Brayton unit; an external source circuit configured to provide heat to the closed cycle Brayton unit; and a cooling circuit configured to remove heat from the closed cycle Brayton unit. The closed cycle Brayton unit includes a multistage compressor configured to cool a flowing medium between the stages to a predetermined temperature.

According to yet another exemplary embodiment, there is a method for rotating a shaft of an expander that is part of a closed cycle Brayton system. The method includes compressing a flowing medium with a multistage compressor; cooling the flowing medium with at least one inter-cooler mechanism between first and second stages of the multistage compressor to a predetermined temperature; circulating the compressed flowing medium to a first heat exchanger fluidly connected to the multistage compressor; transferring heat from a working medium passing the first heat exchanger to the compressed flowing medium; circulating the heated flowing medium to an expander that is fluidly connected to the first heat exchanger; expanding the heated flowing medium in the expander for rotating a shaft of the expander; circulating the expanded flowing medium to a second heat exchanger that is fluidly connected between the expander and the multistage compressor; removing heat from the expanded flowing medium in the second heat exchanger; and circulating the cooled flowing medium back to the multistage compressor.

The accompanying drawings, which are incorporated in and constitute a part of the specification, illustrate one or more embodiments and, together with the description, explain these embodiments. In the drawings:
Figure 1 is a schematic diagram of an open cycle Brayton cycle unit;
Figure 2 is a schematic diagram of a closed cycle Brayton cycle unit;
Figure 3 is a schematic diagram of a closed cycle Brayton cycle system according to an exemplary embodiment;
Figure 4 is a schematic diagram of a multistage compressor with a bull gear;
Figure 5 is a schematic diagram of a closed cycle Brayton cycle system according to an exemplary embodiment;
Figure 6 illustrates a pressure versus enthalpy phase space for a flowing medium through the closed cycle Brayton cycle system according to an exemplary embodiment; and
Figure 7 is a flow chart illustrating a method for generating energy according to an exemplary embodiment.

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a system having an integrally geared compressor (technology to be discussed later) and a multiple stage radial or axial expander. However, the embodiments to be discussed next are not limited to these systems, but may be applied to other systems that use multistage compressors and expanders in a closed cycle.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

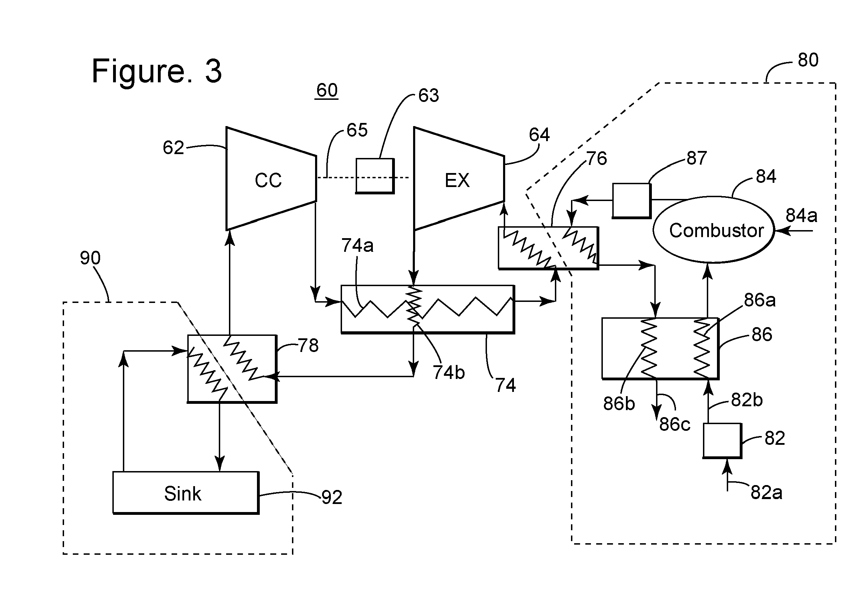

According to an exemplary embodiment illustrated in Figure 3, a novel closed Brayton cycle system 60 may include a compressor 62 fluidly connected to an expander 64. The compressor 62 may be a multistage compressor and the expander 64 may be a multistage expander. In one application, the compressor 62 has four stages and uses SRL technology (to be discussed next) and the expander 64 is a two-stage radial expander. However, other types of compressors and expanders may be used.

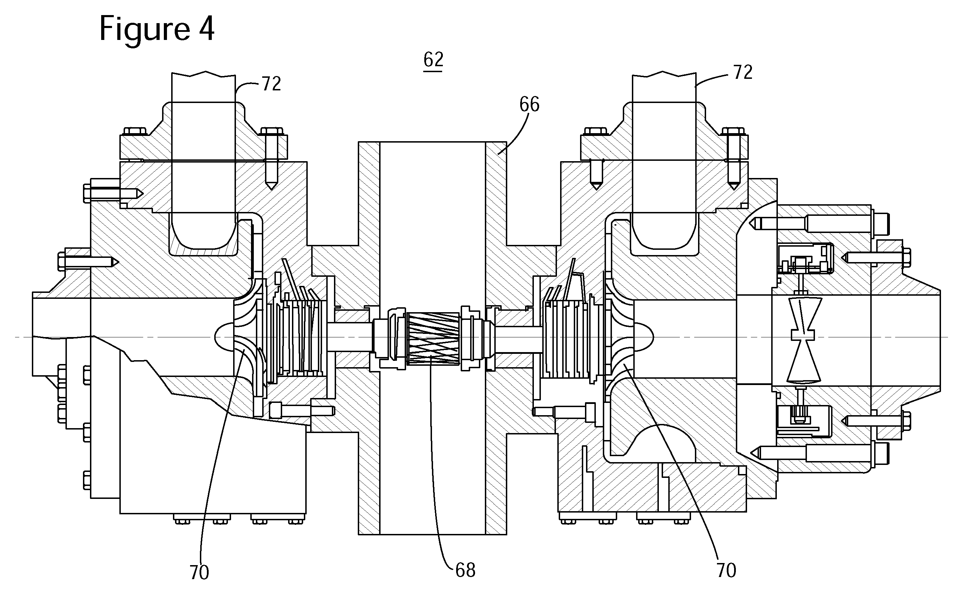

SRL or integrally geared compressors (produced by Nuovo Pignone S.p.A., Florence, Italy) are used in several petrochemical applications, either for low-flow/high pressure, or high-flow/low pressure conditions. This type of compressor, which is illustrated in Figure 4, has a bull gear 66 and from one to four high speed pinions 68. One or two impellers 70 can be mounted on each pinion-shaft as show in Figure 4. Inter-cooling mechanisms 72 may be provided between the stages for cooling in a desired fashion the compressed medium when passing from one stage of the compressor to another stage of the compressor.

Returning to Figure 3, a flowing medium that is compressed by the compressor 62 follows the following closed path inside system 60. From the compressor 62, the flowing medium enters a recuperator 74, a first heat exchanger 76, the expander 64, again the recuperator 74, a second heat exchanger 78 and goes back to the compressor 62. Thus, the flowing medium is confined to this closed path and does not contaminate or interacts with the ambient or other fluids. The flowing medium may be CO₂ or another fluid having a high molecular density. In one exemplary embodiment, system 60 is designed such that the CO₂ remains in a gas phase irrespective of the location in the system, i.e., no phase change takes place inside system 60. The expander 64 may be connected to a power generation unit 63 for producing electricity. The expander 64, compressor 62 and power generation unit 63 may share a same shaft 65, as shown in Figure 3. As would be recognized by those skilled in the art, the expander 64 may be connected to other devices (e.g., a pump) for providing the necessary energy to activate them.

Two more circuits are shown in Figure 3 and discussed next. The first heat exchanger 76 is configured to transfer heat from an external source circuit 80 to the flowing medium of the Brayton closed circuit 60. In one exemplary embodiment, the external source circuit 80 may include a compressor that absorbs ambient air at inlet 82a and output compressed air at outlet 82b. Prior to providing this compressed air to a combustion chamber 84, the compressed air is flown through a heat exchanger 86 for heating the compressed air. The heat source is the exhaust gasses from the combustion chamber 84. It is noted that path 86a of the compressed air from compressor 82 and path 86b of the combustion chamber 84 do not intersect but are distributed so that heat is exchanged between the two.

The heated and compressed air is then provided to the combustion chamber 84 where fuel is inserted at inlet 84a. The compressed air is heated by the burning of the fuel. The hot mixture of air, fuel, and exhaust gas may enter an expander 87 for generating energy or may be supplied directly to the first heat exchanger 76 for transferring heat to the flowing medium in the closed Brayton cycle system 60. After removing part of the heat of the gas exhaust, the gas exhaust may enter the heat exchanger 86 to heat the compressed air from the compressor 82 prior to being disposed in the atmosphere at outlet 86c. A temperature of the exhaust gas may be around 150 °C.

The second heat exchanger 78 is configured to transfer heat from the flowing medium in the closed Brayton cycle system 60 to a cooling circuit 90. The cooling circuit 90 may include a working medium (e.g., water) that is circulated through the second heat exchanger 78 for removing heat from the flowing medium coming from the expander 64. The heat is provided to a sink 92, for example, a water tower.

Recuperator 74 includes at least two separate paths 74a and 74b that accommodate the flowing medium coming from the compressor 62 and the expander 64, respectively. Recuperator 74 is configured to remove heat from the flowing medium coming from the expander and to provide that heat to the flowing medium coming from the compressor 62.

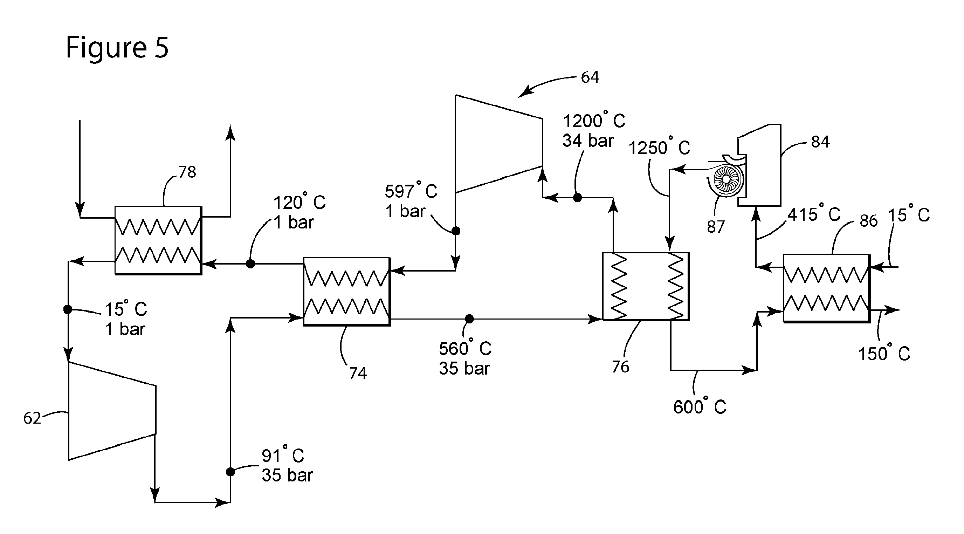

A more specific example in terms of pressures and temperatures of the closed Brayton cycle system 60 is illustrated in Figure 5. This figure shows that compressor 62 increases the pressure of the flowing medium from around 1 bar to around 35 bar and the first heat exchanger 76 increases the temperature of the flowing medium to around 1200 °C prior to reaching the expander 64. This system shows a higher efficiency than the existing systems as the flowing medium is cooled between the stages of the compressor 62 and heat extraction in the external source circuit 80 is up to 150 °C. In one application, the efficiency of the system shown in Figure 5 reached 49%.

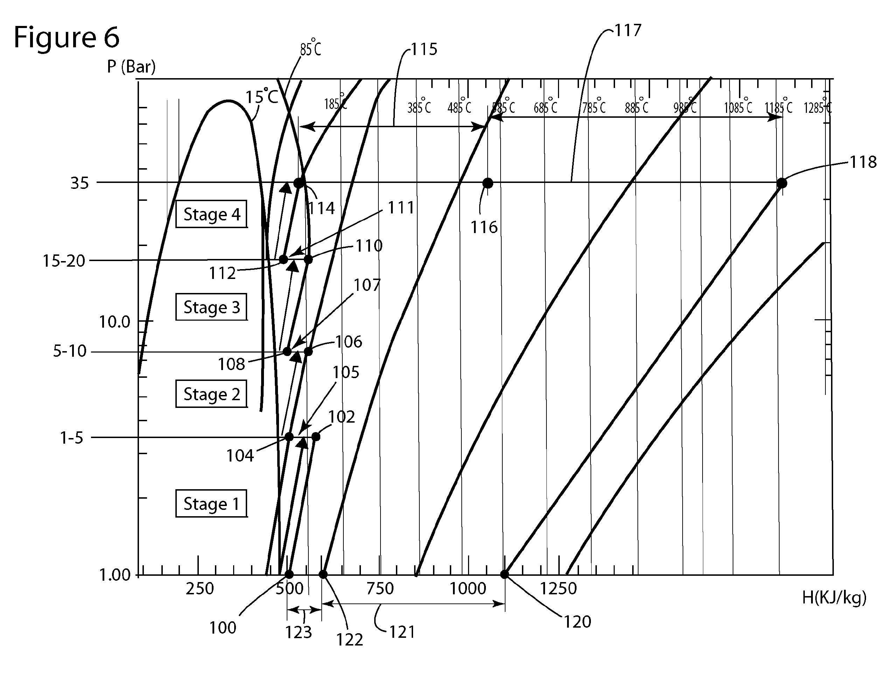

In an exemplary embodiment, Figure 6 shows a P-H diagram (P indicates the pressure and H indicates the enthalpy of the flowing medium at a certain point) for the flowing medium (CO₂) of the closed Brayton cycle system 60. As previously discussed, those skilled in the art would appreciate that the thermodynamic transformations shown in Figure 6 are ideal and are meant to approximate the real transformations that take place in the real system 60. However, these ideal transformations are a good indicator of the characteristics of the real system.

Various points are shown in Figure 6 and they correspond to physical locations in the closed Brayton cycle system 60 as will be described next. Consider that the CO₂ enters the compressor 62 at 100 at a certain temperature (close to 15 °C) and pressure (1 bar). The CO₂ is compressed during a first stage (assume that the compressor has four stages) from 1 bar to around 4 bars so that the CO₂ reaches point 102. At this point, the temperature of the compressed CO₂ may reach a value around 70 to 100 °C. The compression of the CO₂ between points 100 and 102 is isentropic. Once the CO₂ exits the first stage and prior to entering the second stage, the compressed CO₂ is cooled in step 105 to a predetermined temperature, e.g., around 25 °C. It is noted that the first cooling step 105 takes place between points 102 and 104 at a substantially constant pressure. Next, the CO₂ enters the second stage of the compressor where its pressure further increases to, for example, around 8 bar when reaching point 106. The temperature of the CO₂ also increases to around 70 to 100 °C at point 106. From here, the CO₂ undergoes a second cooling step 107 that takes place between points 106 and 108. The temperature of the CO₂ is reduced again to around the predetermined temperature. The process describing the compression of the CO₂ in the compressor 62 may be described in the phase space defined by pressure versus enthalpy as having a see-saw shape.

The CO₂ is further compressed between points 108 and 110 to a pressure around 17 bar and between points 112 and 114 to a final pressure of around 34 bar. Between the third stage and the fourth stage, the CO₂ is again cooled between points 110 and 112 during step 111 in order to bring the temperature of the CO₂ to the predetermined temperature. It is noted that the predetermined temperature may depend on the medium used, the final pressure of the medium, and other parameters of the system. Once at point 114, the compressed CO₂ leaves the compressor 62 (in Figure 3) and enters the recuperator 74. The thermodynamic process 115 taking place inside the recuperator 74 is bounded by points 114 and 116 and the CO₂ increases its temperature while maintaining a substantially constant pressure during this process. Further heat is added to the CO₂ along path 117 bounded by points 116 and 118, which correspond to the flowing medium being heated inside the first heat exchanger 76. It is noted that the heat provided by the first heat exchanger 76 is produced in the combustion chamber 84.

The CO₂ enters then expander 64 and the corresponding thermodynamic process is bounded by points 118 and 120 and this expansion is an isentropic expansion. It is noted that the temperature of the flowing medium at point 118 may be around 1200 °C while the temperature at point 120 may be around 600 °C. To further reduce the temperature of the flowing medium at point 120 and to further extract energy, the flowing medium enters recuperator 74, which corresponds to a recuperation process 121 that is bounded by points 120 and 122. This process 121 takes place at substantially constant pressure (close to atmospheric pressure). The temperature drop for this process is around 500 °C. However, other values may be implemented. The CO₂ is further cooled from point 122 to point 100 (cooling step 123) by circulating it through the second heat exchanger 78. During this cooling process, the temperature and pressure of the CO₂ may reach the ambient temperature and pressure and a new cycle may be started by sending the CO₂ back to the compressor.

The inter-cooling steps 105, 107 and 111 (more or less of these steps may be implemented) help to improve the efficiency of the whole cycle. Other features of the novel embodiments, e.g., running a closed Brayton cycle system, using the CO₂ as the flowing medium and having the CO₂ in a gaseous phase through the system also help to improve the efficiency of the whole cycle. According to an exemplary embodiment, all these four features may be combined. However, not all features are required for achieving an improved efficiency Brayton cycles system.

If the system shown in Figure 3 is used with an external combustion chamber 84 (e.g., a furnace), an advantage of this setup is the freedom to use low grade fuels for combustion. Also, the system shown in Figure 3 is a green product as the exhaust gases from the combustion chamber 84 are discharged into the atmosphere at a lower temperature (around 150 °C) than the existing systems (around 500 °C). This feature is achieved due in part to the heat exchanger 86.

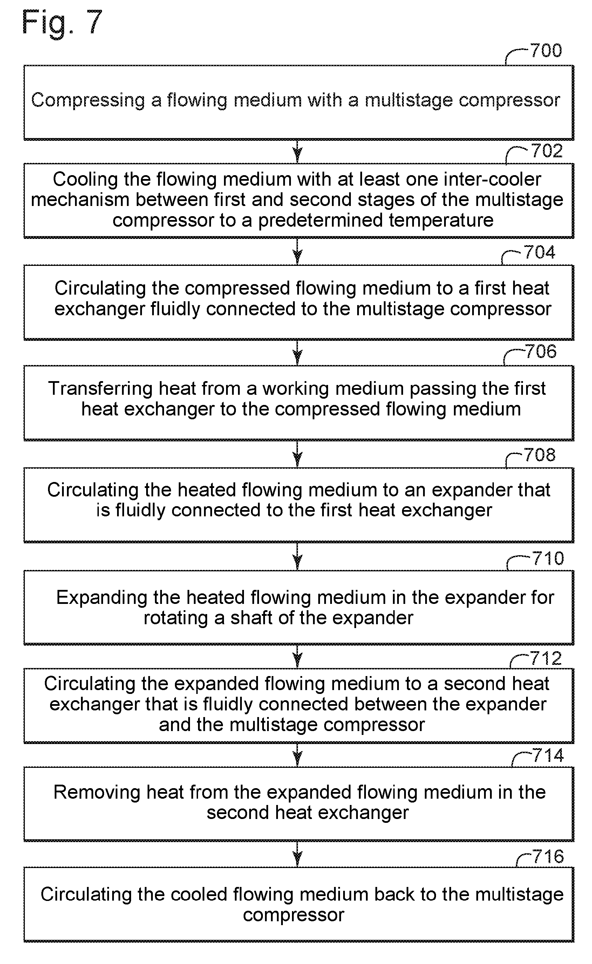

Next, a method for producing energy based on a closed cycle CO₂ Brayton system is discussed with regard to Figure 7. The method includes a step 700 of compressing a flowing medium with a multistage compressor; a step 702 of cooling the flowing medium with at least one inter-cooler mechanism between first and second stages of the multistage compressor to a predetermined temperature; a step 704 of circulating the compressed flowing medium to a first heat exchanger fluidly connected to the multistage compressor; a step 706 of transferring heat from a working medium passing the first heat exchanger to the compressed flowing medium; a step 708 of circulating the heated flowing medium to an expander that is fluidly connected to the first heat exchanger; a step 710 of expanding the heated flowing medium in the expander for rotating a shaft of the expander; a step 712 of circulating the expanded flowing medium to a second heat exchanger that is fluidly connected between the expander and the multistage compressor; a step 714 of removing heat from the expanded flowing medium in the second heat exchanger; and a step 716 of circulating the cooled flowing medium back to the multistage compressor.

The disclosed exemplary embodiments provide a system and a method for increasing an efficiency of a closed cycle Brayton system. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

Various aspects and embodiments of the present invention are defined by the following numbered clauses:
1. A Brayton cycle unit, the unit comprising:
   a multistage compressor configured to compress a flowing medium;
   a first heat exchanger fluidly connected to the multistage compressor and configured to transfer heat from a working medium passing the first heat exchanger to the compressed flowing medium;
   an expander fluidly connected to the first heat exchanger and configured to expand the heated compressed flowing medium for producing a rotation of a shaft of the expander; and
   a second heat exchanger fluidly connected between the expander and the compressor and configured to remove heat from the expanded flowing medium,
   wherein a path of the flowing medium through the multistage compressor, the first heat exchanger, the expander and the second heat exchanger is closed, and
   wherein there is at least one inter-cooler mechanism between first and second stages of the multistage compressor configured to cool the flowing medium between the first and second stages to a predetermined temperature.
2. The unit of clause 1, wherein the multistage compressor has four stages and three inter-cooler mechanisms between each pair of adjacent stages.
3. The unit of clause 1 or clause 2, further comprising:
   a recuperator having a first path that fluidly connects the multistage compressor to the first heat exchanger and a second path that fluidly connects the expander to the second heat exchanger and is configured to transfer heat from the expanded flowing medium to the compressed flowing medium.
4. The unit of any preceding clause, further comprising:
   an external source circuit including
   a compressor configured to compress air and provide it to an external combustion chamber that is configured to receive the air and fuel and burn the mix and provided the exhaust gases to a path through the first heat exchanger, and
   a heat exchanger configured to cool the exhaust gases coming from the first heat exchanger,
   wherein the first heat exchanger is divided such that the air, the fuel and the exhaust gases are separated from the flowing medium.
5. The unit of any preceding clause, wherein the flowing medium is carbon dioxide.
6. The unit of any preceding clause, wherein the carbon dioxide is in a gas phase throughout the multistage compressor, the first heat exchanger, the expander, and the second heat exchanger.
7. The unit of any preceding clause, wherein the flowing medium is in a gas phase when being compressed through the multistage compressor, heated in the first heat exchanger, expanded in the expander, and cooled in the second heat exchanger.
8. The unit of any preceding clause, wherein the at least one inter-cooler mechanism is configured to cool the flowing medium at substantially constant pressure and at a decreasing enthalpy.
9. The unit of any preceding clause, wherein the flowing medium is carbon dioxide, the carbon dioxide is in a gas phase and remains in the gas phase through the multistage compressor, the first heat exchanger, the expander, and the second heat exchanger, the multistage compressor has four stages and a bull gear with four pinions, each pinion activating an impeller for one of the stages, and the expander is a two stage expander.
10. The unit of any preceding clause, wherein a compression process through the multistage compressor when plotted in a pressure versus enthalpy state space has a see-saw shape.
11. A Brayton cycle system, the system comprising:
   a closed cycle Brayton unit;
   an external source circuit configured to provide heat to the closed cycle Brayton unit; and
   a cooling circuit configured to remove heat from the closed cycle Brayton unit,
   wherein the closed cycle Brayton unit includes a multistage compressor configured to cool a flowing medium between the stages to a predetermined temperature.
12. The system of clause 11, wherein the closed cycle Brayton unit further comprises:
   a first heat exchanger fluidly connected to the multistage compressor and configured to transfer heat from a working medium passing the first heat exchanger to the compressed flowing medium;
   an expander fluidly connected to the first heat exchanger and configured to expand the heated compressed flowing medium for producing a rotation of a shaft of the expander; and
   a second heat exchanger fluidly connected between the expander and the compressor and configured to remove heat from the expanded flowing medium,
   wherein a path of the flowing medium through the multistage compressor, the first heat exchanger, the expander and the second heat exchanger is closed, and
   wherein there is at least one inter-cooler mechanism between first and second stages of the multistage compressor configured to cool the flowing medium between the first and second stages to a predetermined temperature.
13. The system of clause 11 or clause 12, wherein the multistage compressor has four stages and three inter-cooler mechanisms between each pair of adjacent stages.
14. The system of any of clauses 11 to 13, further comprising:
   a recuperator having a first path that fluidly connects the multistage compressor to the first heat exchanger and a second path that fluidly connects the expander to the second heat exchanger and is configured to transfer heat from the expanded flowing medium to the compressed flowing medium.
15. The system of any of clauses 11 to 14, wherein the external source circuit comprises:
   a compressor configured to compress air and provide it to an external combustion chamber that is configured to receive the air and fuel and burn the mix and to provide the exhaust gases to a path through the first heat exchanger, and
   a heat exchanger configured to cool the exhaust gases coming from the first heat exchanger,
   wherein the first heat exchanger is divided such that the air, the fuel and the exhaust gases are separated from the flowing medium.
16. The system of any of clauses 11 to 15, wherein the flowing medium is carbon dioxide and the carbon dioxide is in a gas phase throughout the multistage compressor, the first heat exchanger, the expander, and the second heat exchanger.
17. The system of any of clauses 11 to 16, wherein the flowing medium is in a gas phase when being compressed through the multistage compressor, heated in the first heat exchanger, expanded in the expander, and cooled in the second heat exchanger.
18. The system of any of clauses 11 to 17, wherein the at least one inter-cooler mechanism is configured to cool the flowing medium at substantially constant pressure and at a decreasing enthalpy.
19. The system of any preceding clause, wherein the flowing medium is carbon dioxide, the carbon dioxide is in a gas phase and remains in the gas phase through the multistage compressor, the first heat exchanger, the expander, and the second heat exchanger, the multistage compressor has four stages and a bull gear with four pinions, each pinion activating an impeller for one of the stages, and the expander is a two stage expander.
20. A method for rotating a shaft of an expander that is part of a closed cycle Brayton system, the method comprising:
   compressing a flowing medium with a multistage compressor;
   cooling the flowing medium with at least one inter-cooler mechanism between first and second stages of the multistage compressor to a predetermined temperature;
   circulating the compressed flowing medium to a first heat exchanger fluidly connected to the multistage compressor;
   transferring heat from a working medium passing the first heat exchanger to the compressed flowing medium;
   circulating the heated flowing medium to an expander that is fluidly connected to the first heat exchanger;
   expanding the heated flowing medium in the expander for rotating a shaft of the expander;
   circulating the expanded flowing medium to a second heat exchanger that is fluidly connected between the expander and the multistage compressor;
   removing heat from the expanded flowing medium in the second heat exchanger; and
   circulating the cooled flowing medium back to the multistage compressor.

## Claims

1. A Brayton cycle unit (60), the unit comprising:
a multistage compressor (62) configured to compress a flowing medium;
a first heat exchanger (76) fluidly connected to the multistage compressor (62) and configured to transfer heat from a working medium passing the first heat exchanger (76) to the compressed flowing medium;
an expander (64) fluidly connected to the first heat exchanger (76) and configured to expand the heated compressed flowing medium for producing a rotation of a shaft of the expander (76); and
a second heat exchanger (78) fluidly connected between the expander (64) and the compressor (62) and configured to remove heat from the expanded flowing medium,
wherein a path of the flowing medium through the multistage compressor (62), the first heat exchanger (76), the expander (64) and the second heat exchanger (78) is closed, and
wherein there is at least one inter-cooler mechanism (72) between first and second stages of the multistage compressor (62) configured to cool the flowing medium between the first and second stages to a predetermined temperature.

2. The unit of claim 1, wherein the multistage compressor (62) has four stages and three inter-cooler mechanisms between each pair of adjacent stages.

3. The unit of claim 1 or claim 2, further comprising:
a recuperator (74) having a first path (74a) that fluidly connects the multistage compressor (62) to the first heat exchanger (76) and a second path (74b) that fluidly connects the expander (64) to the second heat exchanger (78) and is configured to transfer heat from the expanded flowing medium to the compressed flowing medium.

4. The unit of any preceding claim, further comprising:
an external source circuit (80) including
a compressor (82) configured to compress air and provide it to an external combustion chamber (84) that is configured to receive the air and fuel and burn the mix and provided the exhaust gases to a path through the first heat exchanger (76), and
a heat exchanger (86) configured to cool the exhaust gases coming from the first heat exchanger (76),
wherein the first heat exchanger (76) is divided such that the air, the fuel and the exhaust gases are separated from the flowing medium.

5. The unit of any preceding claim, wherein the flowing medium is carbon dioxide.

6. The unit of any preceding claim, wherein the carbon dioxide is in a gas phase throughout the multistage compressor (62), the first heat exchanger (76), the expander (64), and the second heat exchanger (78).

7. The unit of any preceding claim, wherein the flowing medium is in a gas phase when being compressed through the multistage compressor (62), heated in the first heat exchanger (76), expanded in the expander (64), and cooled in the second heat exchanger (78).

8. The unit of any preceding claim, wherein the at least one inter-cooler mechanism (72) is configured to cool the flowing medium at substantially constant pressure and at a decreasing enthalpy.

9. The unit of any preceding claim, wherein the flowing medium is carbon dioxide, the carbon dioxide is in a gas phase and remains in the gas phase through the multistage compressor (62), the first heat exchanger (76), the expander (64), and the second heat exchanger (78), the multistage compressor (62) has four stages and a bull gear with four pinions, each pinion activating an impeller for one of the stages, and the expander (64) is a two stage expander.

10. The unit of any preceding claim, wherein a compression process through the multistage compressor (62) when plotted in a pressure versus enthalpy state space has a see-saw shape.

11. A Brayton cycle system, the system comprising:
a closed cycle Brayton unit (60);
an external source circuit (80) configured to provide heat to the closed cycle Brayton unit (60); and
a cooling circuit (90) configured to remove heat from the closed cycle Brayton unit (60),
wherein the closed cycle Brayton unit (60) includes a multistage compressor (62) configured to cool a flowing medium between the stages to a predetermined temperature.

12. The system of claim 11, wherein the closed cycle Brayton unit (60) further comprises:
a first heat exchanger (76) fluidly connected to the multistage compressor (62) and configured to transfer heat from a working medium passing the first heat exchanger (76) to the compressed flowing medium;
an expander (64) fluidly connected to the first heat exchanger (76) and configured to expand the heated compressed flowing medium for producing a rotation of a shaft of the expander (76); and
a second heat exchanger (78) fluidly connected between the expander (64) and the compressor (62) and configured to remove heat from the expanded flowing medium,
wherein a path of the flowing medium through the multistage compressor (62), the first heat exchanger (76), the expander (64) and the second heat exchanger (78) is closed, and
wherein there is at least one inter-cooler mechanism (72) between first and second stages of the multistage compressor (62) configured to cool the flowing medium between the first and second stages to a predetermined temperature.

13. The system of claim 11 or claim 12, wherein the multistage compressor (62) has four stages and three inter-cooler mechanisms between each pair of adjacent stages.

14. The system of any of claims 11 to 13, further comprising:
a recuperator (74) having a first path (74a) that fluidly connects the multistage compressor (62) to the first heat exchanger (76) and a second path (74b) that fluidly connects the expander (64) to the second heat exchanger (78) and is configured to transfer heat from the expanded flowing medium to the compressed flowing medium;
a compressor (82) configured to compress air and provide it to an external combustion chamber (84) that is configured to receive the air and fuel and burn the mix and to provide the exhaust gases to a path through the first heat exchanger (76); and
a heat exchanger (86) configured to cool the exhaust gases coming from the first heat exchanger (76),
wherein the first heat exchanger (76) is divided such that the air, the fuel and the exhaust gases are separated from the flowing medium.

15. A method for rotating a shaft of an expander (64) that is part of a closed cycle Brayton system (60), the method comprising:
compressing a flowing medium with a multistage compressor (62);
cooling the flowing medium with at least one inter-cooler mechanism (72) between first and second stages of the multistage compressor (62) to a predetermined temperature;
circulating the compressed flowing medium to a first heat exchanger (76) fluidly connected to the multistage compressor (62);
transferring heat from a working medium passing the first heat exchanger (76) to the compressed flowing medium;
circulating the heated flowing medium to an expander (64) that is fluidly connected to the first heat exchanger (76);
expanding the heated flowing medium in the expander (64) for rotating a shaft of the expander (64);
circulating the expanded flowing medium to a second heat exchanger (78) that is fluidly connected between the expander (64) and the multistage compressor (62);
removing heat from the expanded flowing medium in the second heat exchanger (78); and
circulating the cooled flowing medium back to the multistage compressor (62).
